# EUROPEAN PATENT SPECIFICATION

(11) **EP 2 367 915 B1**
(45) Date of publication and mention of the grant of the patent: **25.04.2018**
(21) Application number: 09835563.9
(22) Date of filing: 14.12.2009
(51) Int. Cl.: C10M 107/34, C09K 5/00, C10M 127/00, C10M 129/00, C10M 133/00, C10M 137/00, C10M 169/04, C10N 40/30

(54) **REFRIGERANT LUBRICANT COMPOSITION**
KÜHL- UND SCHMIERMITTELZUSAMMENSETZUNG
COMPOSITION LUBRIFIANTE POUR FRIGORIGÈNE

(30) Priority: 23.12.2008 US 140554 P
(43) Date of publication of application: 28.09.2011
(73) Proprietor: Shrieve Chemical Products, Inc., The Woodlands, TX 77380 (US)
(72) Inventor: DIXON, Elizabeth, Fareham Hampshire P016 8RN (GB); BECKLER, Phil, The Woodlands Texas 77381 (US)
(74) Representative: Cawley, Aimee Elizabeth
(86) International application number: PCT/US2009/067939
(87) International publication number: WO 2010/075046

(56) References cited:
- EP-A1- 2 233 553
- WO-A1-2008/105366
- US-A- 4 975 212
- US-A- 5 238 590
- US-A- 5 370 812
- US-A- 5 498 356
- US-A1- 2007 004 605
- US-A1- 2007 164 252
- US-B1- 6 248 256

## Description

### BACKGROUND

### Field of the Invention

This invention relates to lubricants for synthetic refrigerants. More specifically, this invention relates to lubricants suitable for use with fluoroalkene refrigerants, such as HFO-1234yf refrigerant. Still more specifically, this invention relates to lubricants suitable for use in motor-integrated compressors of refrigeration/air-conditioning systems.

### Background of the Invention

The dominant refrigerant utilized in automotive air conditioning systems has been the hydrofluorocarbon (HFC) known as HFC r134a (1,1,1,2-tetrafluoroethane). European legislation mandates abolition of the use of HFC r134a refrigerant in new mobile (automotive) air-conditioning systems effective in model year 2011. As a result of this mandate, various other refrigerants, including hydrofluoro-olefin (HFO) refrigerants such as HFO-1234yf, having chemical composition 2,3,3,3-tetrafluoroprop-1-ene, are under active development as more environmentally-friendly refrigerants for use in automotive air-conditioning systems. However, refrigerants of the chemical type of HFO-1234yf require a lubricant enabling implementation with traditional automotive air-conditioning systems. Such a refrigeration lubricant offering properties specific to this type of refrigerant must exhibit appropriate miscibility, chemical, thermal and hydrolytic stability, and appropriate pressure, viscosity and temperature dynamics when combined therewith.

With an increasing industry focus on utilizing hybrid and electric air-conditioning compressors to realize vehicle fuel savings, there is a further desire that the lubricant technology developed for belt-driven compressors (e.g. belt-driven HFO-1234yf compressors) be applicable for use in electrically driven compressors, where the electrical properties of the lubricant require careful consideration.

Organic polyalkylene glycol (PAG) lubricants are known, for example, as taught in U.S. Patent App. No. 2007/0069175 to Honeywell. U.S. Patent App. No. 2007/0069175 teaches mixtures of various fluoroalkenes with a variety of lubricants, including organic lubricants of the polyalkylene glycol (PAG) type. U.S. Patent App. No. 2007/0069175 does not teach the suitability of one structural type of lubricant relative to another. Additionally, the disclosure does not address the significant impact on system stability of fluoroalkene type refrigerants and the modifications therefore required from the lubricant perspective with respect to additive technology commonly utilized to provide corrosion prevention, thermal stability, and improved lubricity in refrigeration and air conditioning systems.

The use of PAG-type lubricants in motor-integrated compressors of refrigeration/air conditioning systems is discussed in Japanese Pat. No. JP04015295A to Idemitsu. JP04015295A describes the use of anion and/or cation exchange resins for the purification of certain types of PAGs. EP 2233553 describes a refrigerator oil comprising an ester of a polyhydric alcohol and a fatty acid, used with a fluoropropene refrigerant and/or trifluoroiodomethane refrigerant. US 5498356 decsribes a lubricated refrigerant for use in refrigerators employing hydrofluorocarbon coolants. The lubricated refrigerant contains fluorocarbon coolant, synthetic oil and a carbodiimide compound. WO 2008/105366 describes a working fluid composition for a refrigerator, which is characterised by containing an ester of a polyhydric alcohol and a fatty acid, and a fluoropropene refrigerant and/or trifluoroiodomethane refrigerant. US 6 248 256 describes a composition for use in compression refrigeration comprising inter alia polyalkylene glycol derivatives having a kinematic viscosity of 5-200 mm²/s. US 2007/0004605 discloses lubricant compositions comprising polyalkylene glycols for use in refrigerators.

Accordingly, there is a need in the industry for lubricants suitable for use with HFO refrigerants, particularly for use with HFO-1234yf, and for lubricants suitable for use in motor-integrated compression-type refrigeration/air conditioning systems.

### SUMMARY

According to a first aspect of the invention there is provided a polyalkylene glycol lubricant basefluid for use with a fluoroalkene refrigerant, the polyalkylene glycol lubricant basefluid comprising a PAG having the formula: RX (R^{b}O)_{y}R^{c}, wherein: R is a C14 substituent comprising a heterocyclic ring in which the one heteroatom is oxygen; X is O; R^{b} is a C3 alkylene group; R^{c} is a C3 alkyl group; and y is an integer resulting in a basefluid viscosity of 46cSt at 40°C.

According to a second aspect of the invention there is provided a polyalkylene glycol based lubricant composition for use in motor-integrated compression type refrigeration/ air conditioning systems, the polyalkylene based lubricant composition comprising the polyalkylene glycol lubricant basefluid according to the first aspect of the invention wherein the polyalkylene glycol has been purified such that the purified polyalkylene glycol has a Total Acid Value of less than 0.03 mgKOH/g, a cation content of less than 30 ppm and a moisture content of less than 300ppm, and exhibits a minimum volume resistivity at 20°C of 1 x 10¹² ohm cm, such that the lubricant exhibits substantially no electrical leakage current in motor-integrated compressors.

According to a third aspect of the invention there is provided a working composition comprising: a fluoroalkene refrigerant; and the polyalkylene glycol based lubricant composition according to the second aspect of the invention.

According to a fourth aspect of the invention there is provided a method of operating a motor-integrated compressor of a refrigeration or air conditioning system with substantially no electrical leakage current, the method comprising: operating the compressor with a working fluid composition comprising a fluoroalkene refrigerant and the a polyalkylene glycol based lubricant composition according to the second aspect of the invention.

Thus, embodiments described herein comprise a combination of features and advantages intended to address various shortcomings associated with certain prior art lubricants. The various characteristics described above, as well as other features, will be readily apparent to those skilled in the art upon reading the following detailed description of the various embodiments, viewing the figures and examining the claims.

### NOTATION AND NOMENCLATURE

Unless otherwise noted, the terms 'basefluid,' 'lubricant' and 'lubricant oil' are used interchangeably herein.

Use of the notation C1, C2, C3, and so on is intended to represent functional groups containing the indicated number of carbon atoms. That is, C1 groups contain 1 carbon atom, C2 groups contain 2 carbon atoms, C3 groups contain 3 carbon atoms, and so on.

Use of the phrase 'refrigeration/air-conditioning' is intended to mean 'refrigeration, air-conditioning or both.'

Use of the phrase 'extreme pressure/antiwear additives' is intended to mean 'extreme pressure additives, antiwear additives, additives that serve as both extreme pressure and antiwear additives, or combinations of extreme pressure additives and antiwear additives.'

A 'working fluid composition' may at times be referred to herein as a 'working fluid composition.'

### DETAILED DESCRIPTION

Herein disclosed are basefluids of a type suitable for use in fluoroalkene (e.g. HFO-1234yf) refrigeration and air conditioning systems and/or for use with motor-integrated compressors, refrigeration and lubricant compositions comprising the basefluid and methods of preparing lubricant and refrigeration compositions comprising the basefluid. In embodiments, the basefluid is combined with additive componentry designed to offer an optimized balance of properties desirable for use in HFO (e.g. HFO-1234yf) refrigeration and air-conditioning systems. In embodiments, a basefluid is provided of a sufficient purity that it provides desirable electrical properties for application of the lubricant in motor-integrated compressors (e.g., automotive, electrically driven compressors). The high purity basefluid may be operable with HFO or alternate refrigerants. In such applications, the lubricant composition retains electrical properties required for application where lubricant is in direct contact with motor windings.

***Basefluid.*** The basefluid of this disclosure comprises a polyalkylene glycol. In embodiments, the PAG basefluid is suitable for use with or is purified such that it is suitable for use in motor-integrated compressors. In embodiments, the PAG basefluid is suitable for use with fluoroalkene refrigerants, such as HFO-1234yf refrigerant.

The PAG basefluid comprises a polyalkylene glycol having the formula represented by Eq. (1).

RX (R^{b}O)_{y}R^{c} (1)

wherein: R is a C14 substituent comprising a heterocyclic ring in which heteroatom is oxygen; X is O; R^{b} is a C3 alkylene group; R^{c} is a C3 alkyl group; and y is an integer resulting in a basefluid viscosity of 46cSt at 40°CIn embodiments, the basefluid is miscible with the HFO refrigerant HFO-1234yf, as will be further discussed hereinbelow.

In embodiments, the lubricating oil basefluid is or has been subjected to further purification procedures whereby the lubricant exhibits a volume resistivity at 20°C of at least 1 x 10¹² ohm cm. In embodiments, the polyalkylene glycol is purified with cation and/or anion exchange techniques to offer minimized levels of either or both acid or alkali metal catalyst. In embodiments, the basefluid is provided at or purified such that the Total Acid Value of the basefluid is less than about 0.03 mgKOH/g, less than about 0.02 mgKOH/g, or less than about 0.01 mgKOH/g. In embodiments, the basefluid is provided at or purified such that the cation content of the purified basefluid is less than about 30 ppm, less than about 20ppm, or less than about 10ppm.

The polyalkylene glycol may also be dried via enhanced drying techniques to reduce the moisture content of the basefluid to values typically lower then previously utilized for PAG lubricants in refrigeration/air conditioning systems. In embodiments, the basefluid is a polyalkylene glycol that is provided at or dried to a moisture content of less than about 300ppm, less than about 200ppm, or less than about 100ppm.

In embodiments, the lubricant basefluid or lubricant composition has a viscosity index of at least 150, at least 120, or at least 100. In embodiments, the lubricant basefluid or lubricant composition when added to a refrigerant, at a concentration of at most 50 wt%, retains a one liquid phase at temperatures between about -60°C and about 30°C, between about -75°C and about 75°C, and/or between about -100°C to about 100°C. In embodiments, the lubricant basefluid or lubricant composition when added to a fluoroalkene refrigerant (e.g. HFO 1234yf refrigerant), at a concentration of at most 50 wt%, retains a one liquid phase at temperatures between about -40°C and about 10°C, between -50°C and about 20°C, and/or between -60°C and about 30°C.

***Lubricant Composition.*** The lubricating oil or basefluid may be used in combination with additives, such as extreme pressure additives, antiwear additives, antioxidants, and anticorrosion additives, antifoam additives, acidity regulators and water-eliminating additives.

Herein disclosed are compositions comprising a basefluid as described above with one or more additives. It has been determined that the incorporation of certain additives with the disclosed polyalkylene glycol basefluid offers performance benefits with respect to the functionalities of the additives, without compromising aspects of lubricant performance in refrigeration and air conditioning systems which are commonly associated with additisation for cooling, air-conditioning, and refrigeration systems. In embodiments, a lubricating composition comprises a lubricant basefluid as described in Eq. (1) in conjunction with one or more additives. In embodiments, the one or more additives are selected from the groups listed hereinafter. Although the additives disclosed herein may be particularly desirable additives for use with the disclosed basefluid, the listing is not exclusive, and other additives known to one skilled in the art may alternatively or additionally be suitable. Appropriate selection, combination, and/or concentration of one or more additives with the basefluid may provide optimized levels of lubricant and refrigerant performance, with respect to corrosion and pressure derived wear within the system, without compromising the chemical and/or thermal stability of the refrigerant.

In embodiments, the lubricant composition comprises from about 1.0% to about 10.0wt% additives, from about 2.0wt% to about 6.0wt% additives or from about 3.0wt% to about 5.0wt% additives. In embodiments, the refrigeration composition comprises less than about 2.5wt%, 2.0wt%, 1.5wt%, 1.0wt%, 0.5wt% or 0.25wt% additive(s).

In embodiments, a lubricating composition comprises one or more antioxidants. In embodiments, the one or more antioxidants are selected from antioxidants of the common phenolic and aminic types associated with lubricating oils compositions, including, but not limited to, those including benzenepropanoic acid, 3,5-bis(1,1-dimethylethyl)-4-hydroxy, branched alkyl esters, and benzenamine, N-phenyl, reaction products with 2,4,4-trimethylpentene. In embodiments, the branched alkyl esters comprise 6-carbon (C6) to 12-carbon (C12) esters, 7-carbon (C7) to 12-carbon (C12) esters, or 7-carbon (C7) to 9-carbon esters (C9). In certain instances, more than one antioxidant may be utilized in the basefluid to obtain synergistic anti-oxidancy effect known to those skilled in the art of inhibiting oxidation tendency in this basefluid type. A lubricating composition or refrigeration composition according to this disclosure may comprise from about 0wt% to about 4.0 wt% antioxidants, from about 0.1 to about 2.0 wt% antioxidants, or from about 0.2 to about 0.8 wt% antioxidants.

In embodiments, a lubricating composition further comprises one or more corrosion inhibitors. In embodiments, one or more corrosion inhibitors are selected from isomeric mixtures of N,N-bis(2-ethylhexyl)-4-methyl-1H-benzotriazole-1-methylamine and N,N-bis(2-ethylhexyl)-5-methyl-1H-benzotriazole-1-methylamine. A lubricating composition or refrigeration composition according to this disclosure may comprise from about 0.01 to about 1.0 wt% corrosion inhibitors, from about 0.01 to about 0.5 wt% corrosion inhibitors, or from about 0.05 to about 0.15 wt% corrosion inhibitors.

In embodiments, a lubricating composition comprises one or more extreme pressure/antiwear additives. In embodiments, the one or more extreme pressure/antiwear additives are selected from the sulfur and/or phosphorous containing types commonly associated with lubricating oil compositions, including, but not limited to, the group consisting of branched alkyl amines, monohexyl and dihexyl phosphates. In embodiments, the extreme pressure/antiwear additive comprises branched alkyl amine phosphates with a 5-carbon (5C) to 20-carbon (20C) structure (i.e. containing from 5 to 20 carbon atoms), a 10-carbon (10C) to 15-carbon (15C) structure, or a 11-carbon (11C) to 14-carbon (14C) structure. A lubricating composition or refrigeration composition according to this disclosure may comprise from about 0.01 wt% to about 1.0 wt% extreme pressure/antiwear additives, from about 0.01 wt% to about 0.5 wt% extreme pressure/antiwear additives, or from about 0.05 wt% to about 0.15 wt% extreme pressure/antiwear additives.

As mentioned, in embodiments, a lubricating composition further comprises one or more acidity regulators. Suitable acidity regulators include, but are not limited to, those containing an epoxide functionality.

The preferred combination and dosage of additives with polyalkylene glycol lubricant basefluid provides optimized levels of additive performance with respect to corrosion prevention and lubricity enhancement, without compromise of system chemical and thermal stability which may be observed with alternate selection of additives.

***Refrigerant Composition.*** Herein disclosed are refrigerant compositions comprising a PAG-based lubricant basefluid as described hereinabove and a refrigerant. Desirably, the refrigeration composition also comprises one or more additives as discussed hereinabove. The refrigeration composition comprises a fluoroalkene refrigerant. In embodiments, the fluoroalkene comprises 3 or 4 carbon atoms and at least one but no more than two double bonds. In embodiments, the refrigeration composition comprises a refrigerant selected from 1,2,3,3-tetrafluoropropene, 2,3,3,3-tetrafluoropropene, 1,3,3,3-tetrafluoropropene, 3,3,3-trifluoropropene and 1,2,3,3,3-pentafluoropropene. In embodiments, the refrigeration composition comprises the HFO refrigerant HFO-1234yf. In embodiments, a refrigeration composition of this disclosure comprises HFO-1234yf. In embodiments, a refrigeration composition of this disclosure comprises R744. In embodiments, a refrigeration composition of this disclosure comprises R134a.

The lubricant comprises a PAG as represented by Eq. (1) and the lubricant exhibits substantially no electrical leakage current in motor-integrated compressors. Furthermore, the lubricant comprises a PAG as represented by Eq. (1) and the lubricant is suitable for use with fluoroalkene refrigerant in refrigeration/air conditioning systems. In embodiments, the lubricant comprises a PAG as represented by Eq. (1) and the lubricant is suitable for use in compression refrigeration, air conditioning and heat pump systems.

In embodiments, the refrigeration composition comprises from about 0wt% to about 100wt% lubricant basefluid, from about 0wt% to about 80wt% lubricant basefluid, or from about 0wt% to about 50wt% lubricant basefluid. In embodiments, the refrigeration composition comprises less than about 50wt%, 40wt%, 30wt%, 20wt%, 10wt% or 5wt% lubricant basefluid. In embodiments, the refrigeration composition further comprises from about 0wt% to about 10wt% additives, from about 0wt% to about 5wt% additives, or from about 0wt% to about 2.5wt% additives. In embodiments, the refrigeration composition comprises less than about 2.5wt%, 2.0wt%, 1.5wt%, 1wt%, 0.5wt% or 0.25wt% additives.

***Method of Providing Lubricant*** As mentioned hereinabove, herein disclosed is a method of preparing a polyalkylene glycol based lubricant. The method comprises purifying the lubricant via an anion/cation exchange process and moisture removal techniques whereby desirable lubricant properties are obtained. Desirable lubricant properties may include desired values of one or more property selected from total acid value, moisture content, electrical resistivity and combinations thereof.

In embodiments, purifying the lubricating oil produces a purified lubricant having a volume resistivity at 20°C of at least 1 x 10¹² ohm cm. Volume resistivities exceeding 1 x 10¹² ohm cm may be achieved by a combination of catalyst and moisture removal techniques. Specifically, such purification can comprise ion exchange techniques and/or controlled moisture removal using a combination of controlled heating and vacuum techniques. Application of such purification techniques to a PAG lubricant for application with HFO-1234yf refrigerant may enable a single product of ultra-pure quality (i.e., a cation content of less than 30ppm, a moisture content of less than 300ppm and/or a Total Acid Value of less than 0.03mgKOH/g) to be adopted for use in both motor-integrated and non-motor-integrated HFO-1234yf refrigeration and air-conditioning systems. Furthermore, adoption of such purification techniques to similar polyalkylene glycols used in conjunction with alternate refrigerants, including HFC types such as r134a and alternate refrigerants such as r744, which is being proposed as an environmentally friendly refrigerant for use in automotive air-conditioning systems, may allow utilization of PAG lubricants for motor-integrated compressors of these refrigeration/air conditioning systems.

In embodiments, purifying the polyalkylene glycol basefluid with cation and/or anion exchange techniques provides minimized levels of either or both acid or alkali metal catalyst. Purifying the basefluid provides a basefluid having a Total Acid Value of less than about 0.03 mgKOH/g, less than about 0.02 mgKOH/g, or less than about 0.01 mgKOH/g. The method comprises purifying the basefluid such that the cation content of the purified basefluid is less than about 30 ppm, less than about 20ppm, or less than about 10ppm.

Preparing a PAG-based lubricant may further comprise drying a polyalkylene glycol comprising basefluid via enhanced drying techniques to reduce the moisture content of the basefluid to values typically lower then previously utilized for PAG lubricants in refrigeration/air conditioning systems. In embodiments, drying comprises removing moisture from the lubricant such that the moisture content of the dried basefluid is less than about 300ppm, 200ppm, or 100ppm.

In embodiments, preparing a PAG-based lubricant comprises producing a lubricant composition or lubricant basefluid having a viscosity index of at least 150, at least 120 or at least 100. In embodiments, preparing a lubricant composition comprises providing a lubricant that, when added to a refrigerant at a concentration of 50, 40, 30, 20, 10, or 5 wt% or less, provides a refrigeration composition that exhibits a single liquid phase at temperatures between about -40° and about 10°C, between -50° and about 20°C and/or between -60°C and 30°C.

### EXAMPLES

***EXAMPLE 1. Miscibility of Inventive Basefluid in 1234vf Refrigerant vs. Various Structures of PAG Basefluid.*** The miscibility of PAG lubricant basefluids with refrigerant HFO-1234yf at weight percent lubricant concentrations of 0 to 50wt% was determined in accordance with ANSI/ASHRAE 86-1994 standard "Methods of Testing the Floc. Point of Refrigeration Grade Oils." The lubricant and refrigerant were added gravimetrically to heavy-walled glass test tubes. The tubes were then sealed. Phase separation was detected by visual observation as the solution temperature was slowly changed from room temperature (20°C) to - 60°C (cooling cycle) and from room temperature to +95°C (heating cycle). The temperature at which phase separation occurs (i.e. one phase separating into two) were observed on both the cooling and heating cycle, the lowest value at a given wt% lubricant concentration being recorded as the separation temperature (Critical Solution temperature, CST).

The results are presented in Table 1. In this example, ***Sample 1 (Comparative)*** was a PAG basefluid having the formula RX(R^{b}O)_{y}R^{c}, wherein R is a C3 alkyl group; X is O; R^{b} is a C3 alkylene group; R^{c} is the same as R; and y is an integer resulting in a basefluid viscosity of 46cSt at 40°C; ***Sample 2 (Comparative)*** was a PAG basefluid having the formula RX(R^{b}O)_{y}R^{c}, wherein R is a C4 alkyl group; X is O; R^{b} is a C3 alkylene group; R^{c} is H; and y is an integer resulting in a basefluid viscosity of 46cSt at 40°C; ***Sample 3*** was a PAG basefluid according to the invention having the formula RX(R^{b}O)_{y}R^{c}, wherein R is a C14 substituent comprising a heterocyclic ring in which the heteroatom is oxygen; X is O; R^{b} is a C3 alkylene group; R^{c} is a C3 alkyl group; and y is an integer resulting in a basefluid viscosity of 46cSt at 40°C; ***Sample 4 (Comparative)*** was a PAG basefluid having the formula RX(R^{a}O)ₓ(R^{b}O)yRc, wherein R is a C14 substituent comprising a heterocyclic ring in which the heteroatom is oxygen; X is O; R^{a} is a C2 alkylene group; R^{b} is a C3 alkylene group; R^{c} is a C3 alkyl group; and x and y are integers resulting in an equal wt% content of (R^{a}O) and (R^{b}O) and also a basefluid viscosity of 46cSt at 40°C; and ***Sample 5 (Comparative)*** was a PAG basefluid having the formula RX(R^{a}O)ₓ(R^{b}O)_{y}R^{c}, wherein R is a C3 alkyl group; X is O; R^{a} is a C2 alkylene group; R^{b} is a C3 alkylene group; R^{c} is a C3 alkyl group; and x and y are integers resulting in an equal wt% content of (R^{a}O) and (R^{b}O) and also a basefluid viscosity of 46cSt at 40°C.

| **TABLE 1: Miscibility data for PAGs with HFO 1234yf** | | | | | |
|---|---|---|---|---|---|
| **Composition** Weight % Lubricant in 1234yf refrigerant | Separation Temperature **Sample 1 [Comp.]** (°C) | Separation Temperature **Sample 2 [Comp.]** (°C) | Separation Temperature **Sample 3** (°C) | Separation Temperature **Sample 4 [Comp.]** (°C) | Separation Temperature **Sample 5 [Comp.]** (°C) |
| 1.8 | 60.0 | - | - | - | - |
| 4.0 | 42.5 | 24.0 | 42.0 | - | - |
| 7.0 | 33.0 | 8.0 | 34.0 | - | - |
| 7.5 | 32.5 | - | - | - | - |
| 10.0 | 30.0 | 2.0 | 15.0 | - | - |
| 18.0 | 30.0 | - | - | - | - |
| 20.0 | 30.0 | 4.0 | 16.0 | -9.5 | -8.0 |
| 25.9 | 32.5 | - | - | - | - |
| 30.0 | 33.5 | 11.0 | 18.0 | - | - |
| 40.4 | 45.0 | - | - | - | |
| 50.0 | One phase | One phase | One phase | - | - |

Preliminary screening indicated a typical lowest separation temperature for PAG basefluids at around 10 - 20 wt% lubricant, therefore for some (less suitable) samples a nominal value at 20.0wt% lubricant is reported for comparison purposes.

***EXAMPLE 2. Chemical Stability of Inventive Basefluid and Additive Composition in 1234vf Refrigerant.*** The chemical stability of lubricant samples in the presence of HFO-1234yf was tested in accordance with ANSI/ASHRAE 97-1999 standard (Sealed Glass Tube Method to Test the Chemical Stability of Materials for Use Within Refrigerant Systems). The experimental conditions included a temperature of 175°C, a test duration of 14 days, and a moisture content as stated. Copper, aluminum and steel metal coupons were immersed in the test samples according to the standard procedure.

In Example 2, ***Comparative Sample 1b*** had the formula RX(R^{b}O)_{y}R^{c}, wherein R is a C3 alkyl group; X is O; R^{b} is a C3 alkylene group; R^{c} is the same as R; and y is an integer resulting in a basefluid viscosity of 46cSt at 40°C. Sample 1b also comprised the antioxidants benzenepropanoic acid, 3,5-bis (1,1-dimethylethyl) -4-hydroxy, branched alkyl esters, and benzenamine, N-phenyl, reaction products with 2,4,4-trimethylpentene, the corrosion inhibitor isomeric mixture of N,N-bis(2-ethylhexyl)-4-methyl-1H-benzotriazole-1-methylamine and N,N-bis(2-ethylhexyl)-5-methyl-1H-benzotriazole-1-methylamine, and the extreme pressure (EP)/antiwear additive C11 - C14 branched alkyl amines, monohexyl and dihexyl phosphates. ***Comparative Sample 2b*** had the formula RX(R^{b}O)_{y}R^{c}, wherein R is a C4 alkyl group; X is O; R^{b} is a C3 alkylene group; R^{c} is H; and y is an integer resulting in a basefluid viscosity of 46cSt at 40°C. ***Comparative Sample 2b*** also comprised the antioxidants benzenepropanoic acid, 3,5-bis(1,1-dimethylethyl)-4-hydroxy, branched alkyl esters, and benzenamine, N-phenyl, reaction products with 2,4,4-trimethylpentene, the corrosion inhibitor isomeric mixture of N,N-bis(2-ethylhexyl)-4-methyl-1H-benzotriazole-1-methylamine and N,N-bis(2-ethylhexyl)-5-methyl-1H-benzotriazole-1-methylamine, and the EP/antiwear additive C11 - C14 branched alkyl amines, monohexyl and dihexyl phosphates. ***Inventive Sample 3b*** had the formula RX(R^{b}O)_{y}R^{c}, wherein R is a C14 substituent comprising a heterocyclic ring in which the heteroatom is oxygen; X is O; R^{b} is a C3 alkylene group; R^{c} is a C3 alkyl group; and y is an integer resulting in a basefluid viscosity of 46cSt at 40°C. ***Inventive Sample 3b*** also comprised the antioxidants benzenepropanoic acid, 3,5-bis(1,1-dimethylethyl) -4-hydroxy, branched alkyl esters, and benzenamine, N-phenyl, reaction products with 2,4,4-trimethylpentene, the corrosion inhibitor isomeric mixture of N,N-bis(2-ethylhexyl)-4-methyl-1H-benzotriazole-1-methylamine and N,N-bis(2-ethylhexyl)-5 -methyl-1H-benzotriazole-1-methylamine and the EP/antiwear additive C11 - C14 branched alkyl amines, monohexyl and dihexyl phosphates. ***Comparative Sample 6*** had the formula RX(R^{b}O)_{y}R^{c}, wherein R is a C3 alkyl group; X is O; R^{b} is a C3 alkylene group; R^{c} is the same as R; and y is an integer resulting in a basefluid viscosity of 46cSt at 40°C. ***Comparative Sample 6*** also comprised tricresyl phosphate antioxidant (nominal type in usage in refrigeration oil applications), uninhibited with respect to corrosion inhibitors or EP/antiwear additives. *Comparative Sample* 7 had the formula RX(R^{b}O)_{y}R^{c}, wherein R is a C3 alkyl group; X is O; R^{b} is a C3 alkylene group; R^{c} is the same as R; and y is an integer resulting in a basefluid viscosity of 46cSt at 40°C. ***Comparative Sample 7*** also comprised the antioxidants benzenepropanoic acid, 3,5-bis (1,1-dimethylethyl) -4-hydroxy, branched alkyl esters, and benzenamine, N-phenyl, reaction products with 2,4,4-trimethylpentene, the corrosion inhibitor isomeric mixture of N,N-bis(2-ethylhexyl)-4-methyl-1H-benzotriazole-1-methylamine and N,N-bis(2-ethylhexyl)-5-methyl-1H-benzotriazole-1-methylamine and the EP/antiwear additive C11 - C14 branched alkyl amines, monohexyl and dihexyl phosphates, plus epoxide type acid scavengers 1-methyl-4-(2-methyloxiranyl)-7-oxabicyclo[4.1.0] heptane and p-tert-butylphenyl 1-(2,3-epoxy)propyl ether.

Results are presented in Table 2. The comparative data in Table 2 demonstrate that under standard conditions of test (175°C, 14 days, 1000ppm moisture) the additives proposed for use with the inventive basefluid (selected based on miscibility property) provide acceptable levels of chemical stability as evidenced by an absence of coupon corrosion or significant oil degradation, and acceptable levels of post-test Total Acid Value and fluoride ions.

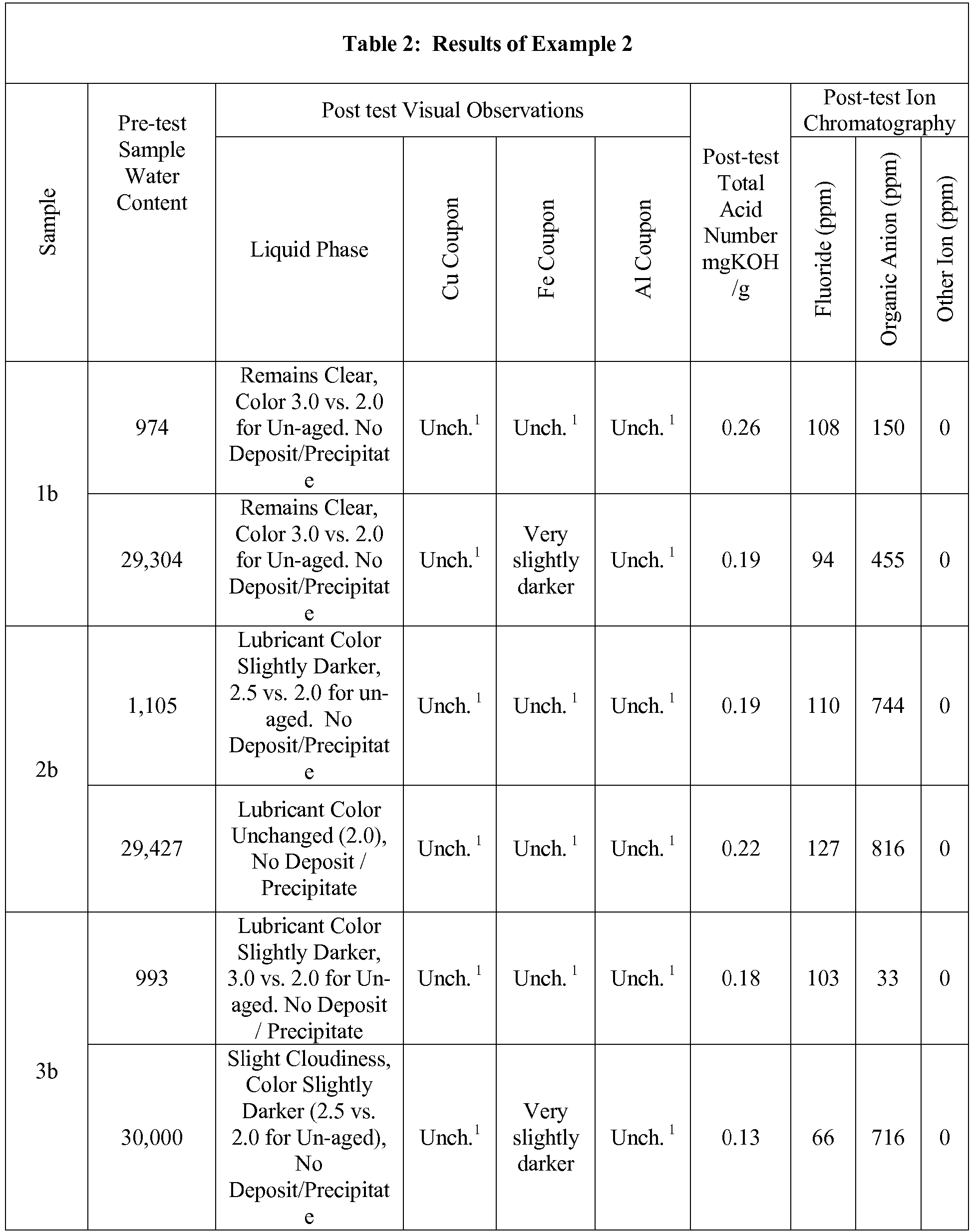

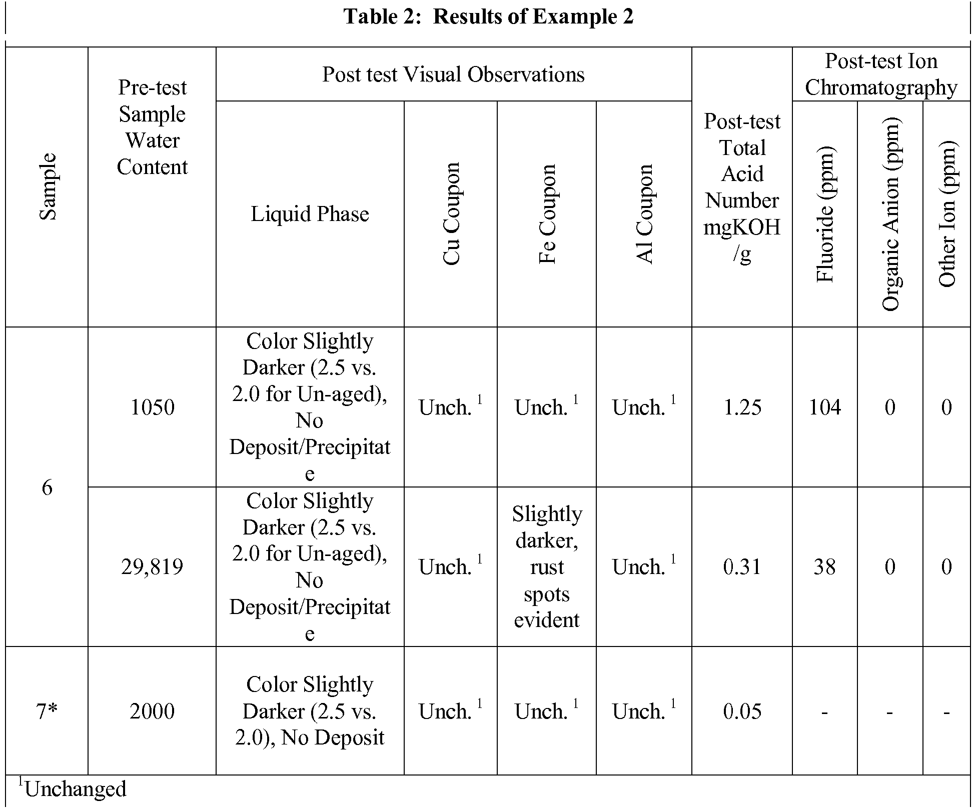

## Claims

1. A polyalkylene glycol lubricant basefluid for use with a fluoroalkene refrigerant, the polyalkylene glycol lubricant basefluid comprising a PAG having the formula:
RX(R^{b}O)_{y}R^{c},
wherein: R is a C14 substituent comprising a heterocyclic ring in which the one heteroatom is oxygen; X is O; R^{b} is a C3 alkylene group; R^{c} is a C3 alkyl group; and y is an integer resulting in a basefluid viscosity of 46cSt at 40°C.

2. A polyalkylene glycol based lubricant composition for use in motor-integrated compression type refrigeration/air conditioning systems, the polyalkylene based lubricant composition comprising the polyalkylene glycol lubricant basefluid of claim 1 wherein the polyalkylene glycol has been purified such that the purified polyalkylene glycol has a Total Acid Value of less than 0.03 mgKOH/g, a cation content of less than 30 ppm and a moisture content of less than 300ppm and exhibits a minimum volume resistivity at 20°C of 1 x 10¹² ohm cm, such that the lubricant exhibits substantially no electrical leakage current in motor-integrated compressors.

3. A working composition comprising:
a fluoroalkene refrigerant; and
the polyalkylene glycol based lubricant composition of claim 2.

4. A method of operating a motor-integrated compressor of a refrigeration or air conditioning system with substantially no electrical leakage current, the method comprising:
operating the compressor with a working fluid composition comprising a fluoroalkene refrigerant and the polyalkylene glycol based lubricant composition of claim 2.

## Patentansprüche

1. Polyalkylenglykol-Schmiermittel-Basisfluid zur Verwendung mit einem Fluoralken-Kältemittel, wobei das Polyalkylenglykol-Schmiermittel-Basisfluid ein PAG umfasst mit der Formel:
RX(R^{b}O)_{y}R^{c},
wobei: R ein C14-Substituent ist, der einen heterocyclischen Ring umfasst, in dem das eine Heteroatom Sauerstoff ist; X O ist; R^{b} eine C3-Alkylengruppe ist; R^{c} eine C3-Alkylgruppe ist; und y eine ganze Zahl ist, resultierend in einer Basisfluid-Viskosität von 46 cSt bei 40 °C.

2. Auf Polyalkylenglykol basierende Schmiermittelzusammensetzung, zur Verwendung in Kühl-/Klimaanalagen vom Typ mit motorintegrierter Kompression, wobei die auf Polyalkylenglykol basierende Schmiermittelzusammensetzung das Polyalkylenglykol-Schmiermittel-Basisfluid nach Anspruch 1 umfasst, wobei das Polyalkylenglykol so gereinigt worden ist, dass das gereinigte Polyalkylenglykol eine Gesamtsäurezahl von weniger als 0,03 mg KOH/g, einen Kationengehalt von weniger als 30 ppm und einen Feuchtigkeitsgehalt von weniger als 300 ppm besitzt und bei 20 °C einen spezifischen Durchgangswiderstand von mindestens 1 x 10¹² Ohm cm aufzeigt, so dass das Schmiermittel im Wesentlichen keinen elektrischen Leckstrom in motorintegrierten Kompressoren aufzeigt.

3. Arbeitszusammensetzung, umfassend:
ein Fluoralken-Kältemittel; und
die auf Polyalkylenglykol basierende Schmiermittelzusammensetzung nach Anspruch 2.

4. Verfahren zum Betrieb eines motorintegrierten Kompressors einer Kühl- oder Klimaanlage mit im Wesentlichen keinem elektrischen Leckstrom, wobei das Verfahren umfasst:
Betreiben des Kompressors mit einer Arbeitsfluidzusammensetzung, die ein Fluoralken-Kältemittel und die auf Polyalkylenglykol basierende Schmiermittelzusammensetzung nach Anspruch 2 umfasst.

## Revendications

1. Fluide de base lubrifiant de polyalkylène glycol pour une utilisation avec un frigorigène de fluoroalcène, le fluide de base lubrifiant de polyalkylène glycol comprenant un PAG présentant la formule:
RX(R^{b}O)_{y}R^{c},
dans laquelle: R est un substituant C14 comprenant un cycle hétérocyclique dans lequel l'un hétéroatome est un oxygène; X est O; R^{b} est un groupe C3 alkylène; R^{c} est un groupe C3 alkyle; et y est un nombre entier conduisant à une viscosité de fluide de base de 46cSt à 40°C.

2. Composition lubrifiante à base de polyalkylène glycol pour une utilisation dans des systèmes de réfrigération/conditionnement d'air de type compression à moteur intégré, la composition lubrifiante à base de polyalkylène comprenant le fluide de base lubrifiant de polyalkylène glycol selon la revendication 1, dans laquelle le polyalkylène glycol a été purifié de sorte que le polyalkylène glycol purifié a un indice d'acide total de moins de 0,03 mg de KOH/g, une teneur en cation de moins de 30 ppm et une teneur en humidité de moins de 300 ppm et affiche une résistivité volumique minimum à 20°C de 1 x 10¹² ohms cm, de sorte que le lubrifiant n'affiche substantiellement pas de courant de fuite électrique dans des compresseurs à moteur intégré.

3. Composition de travail comprenant:
un frigorigène de fluoroalcène; et
la composition lubrifiante à base de polyalkylène glycol selon la revendication 2.

4. Méthode pour faire fonctionner un compresseur à moteur intégré d'un système de réfrigération ou de conditionnement d'air avec substantiellement pas de courant de fuite électrique, la méthode comprenant:
faire fonctionner le compresseur avec une composition de fluide de travail comprenant un frigorigène de fluoroalcène et la composition lubrifiante à base de polyalkylène glycol selon la revendication 2.
